# EUROPÄISCHE PATENTANMELDUNG

(11) **EP 2 610 523 A1**
(43) Veröffentlichungstag der Anmeldung: **03.07.2013**
(21) Anmeldenummer: 11196226.2
(22) Anmeldetag: 30.12.2011
(51) Int. Cl.: F16F 15/34

(54) **Auswuchtgewicht zum automatisierten Roboterhandling**

(71) Anmelder: WEGMANN automotive GmbH & Co. KG, 97209 Veitshöchheim (DE)
(72) Erfinder: Bode, Felix, 97209 Veitshöchheim (DE)
(74) Vertreter: Lohr, Georg

(57) **Zusammenfassung**

Ein Auswuchtgewicht (10,15) umfasst einen an einem Rotationskörper befestigbaren Gewichtskörper (1,5), welcher eine zur Anlage an dem Rotationskörper vorgesehene Befestigungsseite (11), eine dieser gegenüberliegende Vorderseite (12), sowie die Befestigungsseite (11) mit der Vorderseite (12) verbindende Längsseiten (14) und Schmalseiten (13) aufweist, wobei eine Werkzeugangriffskontur (2,3,4,6,7,8), zum positions- und winkelgerechten Greifen des Gewichtskörpers (1,5) ausgebildet ist.

## Beschreibung

Die Erfindung betrifft ein Auswuchtgewicht, welches zur Befestigung an einem Rotationskörper, insbesondere an einem Fahrzeugrad, vorgesehen ist, nach dem Oberbegriff des Anspruchs 1.

Auswuchtgewichte werden üblicherweise zur Kompensation der Unwucht von Fahrzeugrädern verwendet. Ebenso sind Auswuchtgewichte verwendbar, um sonstige Rotationskörper, beispielsweise Wellen, Bremsscheiben oder rotierende Teile von Strömungsmaschinen, auszuwuchten. In allen Fällen kann die Montage von Auswuchtgewichten sowohl vor der Inbetriebnahme des betreffenden rotierenden Teils als auch wiederkehrend vorgesehen sein. Eine wiederkehrende Auswuchtung ist insbesondere dann erforderlich, wenn sich Eigenschaften des Rotationskörpers während dessen Betrieb verändern, wie dies etwa durch Reifenabrieb bei Fahrzeugrädern der Fall ist.

Für Stahl- und Leichtmetallfelgen ist der Einsatz von Klebe-, Schlag- und Steckgewichten gängig. Klebegewichte werden nach Felgenreinigung, Anpassung des Gewichtskörpers an die Felgenform und Abziehen einer Schutzfolie von einem Klebeband gegen die Unwuchtstelle der Felge gepresst. Ein Schlag-Auswuchtgewicht wird über seine am Gewichtskörper befestigte Federklammer mittels Hammerschlag an der Felge zum Einrasten gebracht. Zur Montage eines Steckgewichts wird zunächst eine Federklammer auf die Felge geklemmt, und anschließend wird der von der Federklammer separate Gewichtskörper des Auswuchtgewichts unter die aufbiegbare Federklammer geschoben.

### Stand der Technik

Aus der DE 101 02 321 B4 ist ein Auswuchtgewicht bekannt, welches eine Festlegung mittels Hammer-Schlageinwirkung an der Felge eines Rades ermöglicht. Das Auswuchtgewicht umfasst eine Haltefeder, welche in den Gewichtskörper des Auswuchtgewichts eingegossen sein kann. Einer Korrosionswirkung des Auswuchtgewichts wird durch geeignete Grundwerkstoffe und Beschichtungen des Gewichtskörpers beziehungsweise der Haltefeder wirksam begegnet.

Ein weiteres Auswuchtgewicht ist beispielsweise aus der DE 10 2007 061 669 A1 bekannt. Dieses Auswuchtgewicht weist einen Gewichtskörper mit einer Mehrzahl an Bohrungen und Noppen auf. Hierbei sollen die Noppen, allgemein als Erhabenheiten bezeichnet, das gleichzeitige Aufbringen eines Überzugs an einer Mehrzahl von Gewichtskörpern in einem Tauchbecken ermöglichen. Dem Gewichtskörper ist eine Haltefeder zum Befestigen des Auswuchtgewichts an einem Felgenhorn eines Fahrzeugrades zugeordnet.

Ein als Klebegewicht ausgebildetes Auswuchtgewicht ist beispielsweise aus der DE 10 2009 015 673 A1 bekannt. Dieses Auswuchtgewicht setzt sich aus mehreren sich überlappenden Segmenten zusammen.

Jede der genannten Bauformen eines Auswuchtgewichts ist mit unterschiedlichen Handlingvorrichtungen und unterschiedlichem Automatisierungsgrad an einem Fahrzeugrad - allgemein: an einem Rotationskörper - montierbar.

### Aufgabenstellung

Der Erfindung liegt die Aufgabe zugrunde, ein Auswuchtgewicht anzugeben, welches sich - unabhängig von der Art der Befestigung an einem Rotationskörper, insbesondere an einer Felge - durch besondere Montagefreundlichkeit auszeichnet.

Diese Aufgabe wird erfindungsgemäß gelöst durch ein Auswuchtgewicht mit den Merkmalen des Anspruchs 1. Das Auswuchtgewicht weist einen Gewichtskörper mit einer Werkzeugangriffskontur auf, welche zum positions- und winkelgerechten Greifen des Gewichtskörpers mittels einer Handlingvorrichtung ausgebildet ist.

Insgesamt weist der Gewichtskörper des Auswuchtgewichts die Grundform eines Quaders auf, welcher mit einer so genannten Befestigungs- oder Rückseite an einem auszuwuchtenden Rotationskörper, insbesondere an einer Felge, zur Anlage kommt. Der Befestigungsseite gegenüber liegt die Vorderseite des Gewichtskörpers. Die weiteren Oberflächen des im Wesentlichen quaderförmigen Gewichtskörpers sind durch nicht notwendigerweise durchgehend ebene Längs- und Schmalseiten gebildet.

Insbesondere die Längsseiten des Gewichtskörpers weisen nach einer möglichen Ausführungsform eine Struktur auf, welche als Werkzeugangriffskontur fungiert, das heißt das automatisierte Handling mit Hilfe eines geeigneten Greifwerkzeugs ermöglicht. Hierbei befindet sich vorzugsweise jeweils eine Werkzeugangriffskontur an gegenüberliegenden Längsseiten des Gewichtskörpers, wobei die einander gegenüber liegenden Werkzeugangriffskonturen gleichartig oder unterschiedlich konturiert sein können. Zumindest eine der Werkzeugangriffskonturen verjüngt sich in vorteilhafter Ausgestaltung zur Mitte des Gewichtskörpers hin und bildet damit eine Zentrierhilfe. Diese Zentrierhilfe kann beispielsweise als V-förmiger Einschnitt, als trapezförmige Aussparung, oder als runde, insbesondere kreisbogenförmige, Aussparung gestaltet sein.

Gemäß einer möglichen Weiterbildung dieser Ausführungsform sind die Werkzeugangriffskonturen taschenförmig ausgebildet und erstrecken sich parallel zur Befestigungsseite sowie zur Vorderseite des Gewichtskörpers. Die als flache Taschen geformten Werkzeugangriffskonturen sind hierbei sowohl von der Befestigungsseite als auch von der Vorderseite des Gewichtskörpers beabstandet. In jeder der beiden Längsseiten befindet sich vorzugsweise mindestens eine derartige Tasche, wobei auf mindestens einer der Längsseiten, insbesondere auf genau einer Längsseite, eine Tasche vorgesehen ist, welche zum Inneren des Gewichtskörpers hin schmaler wird. Diese sich nach innen verjüngende Tasche, welche in Seitenansicht des Gewichtskörpers, das heißt mit Blickrichtung auf die betreffende Längsseite, schlitzförmig ist, ist beispielsweise als V-förmiger oder abgerundeter Einschnitt ausgebildet, wobei die V-förmige beziehungsweise abgerundete Kontur in einer Ebene angeordnet ist, welche parallel zwischen der Befestigungsseite und der Vorderseite des Gewichtskörpers liegt.

Insbesondere bei Ausführung des Auswuchtgewichts als Klebegewicht ist vorzugsweise in jeweils einem Bereich der Vorderseite des Gewichtskörpers zwischen der Werkzeugangriffskontur und einer der Schmalseiten ein sich parallel zu den Schmalseiten erstreckender Einschnitt im Gewichtskörper ausgebildet. Die beiden Einschnitte unterteilen den Gewichtskörper in drei etwa gleich große Abschnitte und stellen sicher, dass dieser in ausreichendem Maße verformbar ist.

Nach einer weiteren möglichen Ausführungsform ist eine Werkzeugangriffskontur in der Vorderseite des Gewichtskörpers ausgebildet. Diese Werkzeugangriffskontur kann in Form von Vertiefungen und/oder Erhabenheiten realisiert sein. Im Fall von Vertiefungen können diese beispielsweise als Sacklöcher oder als Durchgangsbohrungen gestaltet sein. In jeder Variante ist durch die Anordnung und/oder Querschnittsgestaltung der Vertiefungen oder Erhabenheiten sichergestellt, dass beim automatischen Handling des Auswuchtgewichts dieses sowohl mit der korrekten Mittelpunktslage als auch mit der gewünschten Winkellage positioniert wird.

Eine als Bohrung ausgebildete Werkzeugangriffskontur weist in bevorzugter Ausgestaltung eine von der Kreisform abweichende Querschnittsform auf. Ein solcher Querschnitt kann zum Beispiel halbkreisförmig, polygonförmig, oder sternförmig sein. Im Fall mehrerer in der Vorderseite des Gewichtskörpers ausgebildeter Werkzeugangriffskonturen weisen diese vorzugsweise voneinander abweichende Querschnittsformen auf.

Bei jeder der vorstehend erläuterten Werkzeugangriffskonturen kann das Auswuchtgewicht entweder als Schlaggewicht, als Schweißgewicht, als Steckgewicht, oder als Klebegewicht ausgebildet sein. Als Werkstoffe zur Herstellung des Gewichtskörpers kommen sämtliche für Auswuchtgewichte bekannten Materialien oder Werkstoffverbünde, insbesondere Legierungen, die Blei, Zinn, Kupfer, Stahl oder Leichtmetall, beipielsweise Aluminium, enthalten, in Betracht. Ebenso sind Kunststoffe für die Herstellung des Gewichtskörpers oder einer Komponente des Gewichtskörpers geeignet. Der Gewichtskörper kann ebenso wie eine eventuelle Haltefeder beschichtet sein, beispielsweise mit einem Lack oder mit einem korrosionsbeständigen Metall, insbesondere Chrom.

Zur Unterstützung des lage- und winkelgerechten Greifens des Gewichtskörpers kann dieser nach einer alternativen Ausgestaltung magnetische Markierungen aufweisen, welche beispielsweise in einen Kunststoffkörper eingebettet und von bekannter, zum Beispiel annähernd punktförmiger oder linienförmiger Geometrie sind. Die magnetischen Markierungen können hierbei entweder durch Permanantmagnete oder durch weichmagnetisches Material gebildet sein. Ein besonders einfaches Aufbringen einer magnetischen Markierung stellt das Aufkleben einer magnetisierten Folie auf den Gewichtskörper oder das Beschichten des Gewichtskörpers mit einem magnetischen Lack dar. Ebenso ist es möglich, unmittelbar einen magnetisierten Metallkörper als mit einer geometrischen Markierung versehenen Gewichtskörper zu verwenden. Ein glatter Oberflächenabschnitt eines Gewichtskörpers kann insbesondere durch Ansaugen zuverlässig und mit ausreichender Präzision mittels eines Greifers, welcher zu diesem Zweck an eine Unterdruckversorgung angeschlossenen ist, aufgenommen und positioniert werden.

Der Vorteil der Erfindung liegt insbesondere darin, dass bei einem Gewichtskörper eines Auswuchtgewichts Strukturen ausgebildet sind, welche unabhängig von der Art der Befestigung des Gewichtskörpers an einem auszuwuchtenden Rotationskörper ein einfaches, präzises, automatisiertes Handling unterstützen. Insbesondere ist es möglich, Schlaggewichte, Steckgewichte, Schweißgewichte und Klebegewichte mit einer einheitlichen Handlingvorrichtung automatisch zu greifen und zu positionieren.

### Ausführungsbeispiele

Weitere Merkmale und Vorteile der Erfindung ergeben sich aus mehreren Ausführungsbeispielen, welche nachfolgend anhand einer Zeichnung erläutert werden. Hierin zeigt:

Fig. 1 Ein als Klebegewicht ausgebildetes Auswuchtgewicht mit Werkzeugangriffskonturen an den Längsseiten in perspektivischer Darstellung,

Fig. 2 das Auswuchtgewicht nach Fig. 1 in Draufsicht,

Fig. 3 - 6 jeweils ein Auswuchtgewicht mit Werkzeugangriffskonturen an den Längsseiten in einer Darstellung analog Fig. 2,

Fig. 7 ein Auswuchtgewicht mit als Bohrung ausgebildeter Werkzeugangriffskontur in der Vorderseite des Gewichtskörpers,

Fig. 8 - 11 jeweils ein Auswuchtgewicht mit als Bohrung ausgebildeter Werkzeugangriffskontur in einer Darstellung analog Fig. 7,

Fig. 12 - 14 unterschiedliche Varianten von Bohrungen als Werkzeugangriffskonturen in Gewichtskörpern,

Fig. 15 ein Auswuchtgewicht mit taschenförmigen Werkzeugangriffskonturen in perspektivischer Darstellung,

Fig. 16 das Auswuchtgewicht nach Fig. 15 in Draufsicht,

Fig. 17 - 20 jeweils ein Auswuchtgewicht mit taschenförmigen Werkzeugangriffskonturen in einer Darstellung analog Fig. 16,

Fig. 21 ein als Steckgewicht ausgebildetes Auswuchtgewicht in perspektivischer Darstellung.

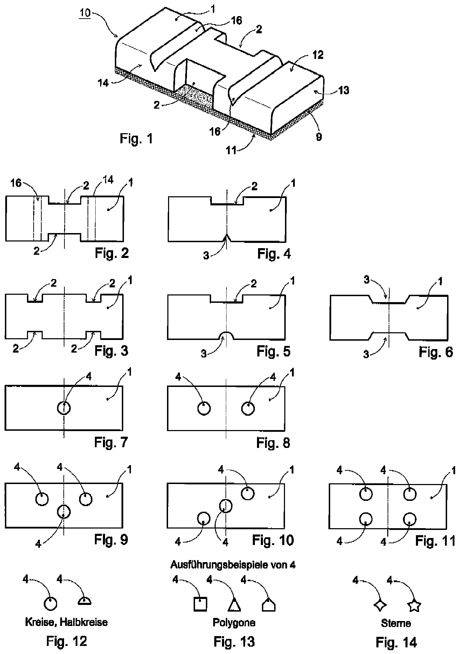

Ein insgesamt mit dem Bezugszeichen 10 gekennzeichnetes Auswuchtgewicht gemäß Fig. 1 weist einen Gewichtskörper 1 auf, welcher mittels eines Klebebandes 9 an einem nicht dargestellten Rotationskörper, insbesondere an einer Leichtmetallfelge, befestigbar ist. Das Auswuchtgewicht 10 ist somit als Klebegewicht ausgebildet.

Das Auswuchtgewicht 10 ist im wesentlichen quaderförmig gestaltet, wobei das Klebeband 9, welches sich über die gesamte Länge und Breite des Gewichtskörpers 1 erstreckt, an einer Befestigungsseite 11 des Gewichtskörpers 1 angebracht ist. Die der Befestigungsseite 11 gegenüber liegende Oberfläche des Gewichtskörpers 1 wird als dessen Vorderseite 12 bezeichnet. Zwischen der Vorderseite 12 und der Befestigungsseite 11 erstrecken sich Schmalseiten 13 sowie Längsseiten 14 des Gewichtskörpers 1.

Wie aus den Figuren 1 und 2 hervorgeht, ist der Gewichtskörper 1 an dessen Längsseiten 14 durch beidseitige Greifflächen 2, allgemein als Werkzeugangriffskonturen bezeichnet, eingeschnürt. Im gezeichneten Beispiel sind die Greifflächen 2 an einer Vertiefungs- oder Ausnehmungswandung ausgebildet. Hierbei befindet sich jeweils eine Werkzeugangriffskontur 2 mittig in einer Längsseite 14. In der Draufsicht nach Fig. 2, das heißt mit Blickrichtung auf die Vorderseite 12, ist jede Werkzeugangriffskontur 2 als Nut mit rechteckigem Querschnitt ausgebildet. Das gesamte Auswuchtgewicht 10 weist mehrere Symmetrieachsen auf. Das Auswuchtgewicht 10 ist beispielsweise zur Montage in der dargestellten Winkellage oder zur Montage in um 180° in der Zeichenebene gedrehter Lage geeignet. Aufgrund der gegebenen Bauteilsymmetrie ist durch die vorhandenen Werkzeugangriffskonturen 2 eine für das automatisierte Handling ausreichende Lage- und Winkelinformation gegeben.

Wie in den Figuren 1 und 2 durch gestrichelte Linien angedeutet ist, sind auf der Vorderseite 12 des Gewichtskörpers 1 optional zwei Einschnitte 16 ausgebildet, welche parallel zu den Schmalseiten 13 verlaufen und sich durchgehend von einer Längsseite 14 zur anderen Längsseite 14 erstrecken. Die Einschnitte 16 sind jeweils zwischen den Werkzeugangriffskonturen 2 und einer der Schmalseiten 13 angeordnet, so dass der Gewichtskörper 1 durch die Einschnitte 16 in drei gleich breite oder zumindest annähernd gleich breite Abschnitte - gemessen zwischen einer Schmalseite 13 und einem Einschnitt 16 beziehungsweise zwischen den beiden Einschnitten 16 - unterteilt ist. Im Querschnitt, mit Blickrichtung auf eine der Längsseiten 14, weisen die Einschitte 16 eine V-förmige oder abgerundete, beispielsweise U-förmige oder halbkreisförmige, Kontur auf. Die Tiefe der Einschnitte 16 beträgt vorzugsweise mehr als die Hälfte des Abstandes zwischen der Befestigungsseite 11 des Gewichtskörpers 1 (ohne Klebeband 9) und dessen Vorderseite 12. Der gesamte, streifenförmige Gewichtskörper 1 ist damit mit geringem Kraftaufwand biegbar. Der Gewichtskörper 1 ist aus einer Zinklegierung hergestellt.

Das Auswuchtgewicht 10 nach Fig. 3 unterscheidet sich vom Ausführungsbeispiel nach den Figuren 1 und 2 dadurch, dass auf jeder Längsseite 14 zwei Werkzeugangriffskonturen 2 in Form rechteckiger Nuten ausgebildet sind. Die Bauteilsymmetrie ist auch in diesem Fall hinsichtlich mehrerer Symmetrieachsen gegeben. Durch die Mehrzahl der an den Längsseiten 14 voneinander beabstandeten Werkzeugangriffskonturen 2 ergeben sich beim Ausführungsbeispiel nach Fig. 3 Vorteile hinsichtlich der Positioniergenauigkeit, insbesondere der Winkelpräzision, gegenüber dem Ausführungsbeispiel nach den Figuren 1 und 2. In beiden Fällen handelt es sich beim Auswuchtgewicht 10 um ein Klebegewicht.

Ein weiteres Ausführungsbeispiel eines als Klebegewicht ausgebildeten Auswuchtgewichts 10 ist in Fig. 4 dargestellt. In diesem Fall unterscheiden sich an den beiden Längsseiten 14 ausgebildete Werkzeugangriffskonturen 2,3 voneinander: Während auf der in der Darstellung oberen Längsseite 14 eine Greiffläche 2 ausgebildet ist, deren Kontur dem Ausführungsbeispiel nach den Figuren 1 und 2 entspricht, ist auf der gegenüberliegenden, in Fig. 4 unteren Längsseite 14 eine Werkzeugangriffskontur 3 erkennbar, welche als Greif-Zentrierung ausgebildet ist und in der dargestellten Ansicht einen V-förmigen Qeurschnitt aufweist. Im Vergleich zu den im Querschnitt rechteckigen Werkzeugangriffskonturen 2 sorgt die spitz zulaufende Werkzeugangriffskontur 3 für ein einfacheres Greifen des Gewichtskörpers 1 mit selbsttätiger Positionskorrektur.

Ein entsprechender Effekt der Selbstzentrierung ist auch beim Ausführungsbeispiel nach Fig. 5 gegeben, welches ebenfalls ein als Klebegewicht ausgebildetes Auswuchtgewicht 10 zeigt. Dieses Ausführungsbeispiel unterscheidet sich vom Ausführungsbeispiel nach Fig. 4 dadurch, dass eine der Werkzeugangriffskonturen 3 nicht V-förmiger, sondern als halbkreisförmiger Einschnitt ausgebildet ist.

In jedem der Ausführungsbeispiele nach den Figuren 4 und 5 entfällt im Vergleich zu den Ausführungsbeispielen nach den Figuren 1 bis 3 eine Symmetrieachse. Eine um 180° verdrehte Montage kommt somit mit den in den Figuren 4 und 5 dargestellten Querschnitten der Werkzeugangriffskonturen 2,3 nicht in Betracht.

Ein Ausführungsbeispiel, welches sowohl Selbstzentrierungseigenschaften aufweist, als auch eine um 180° verdrehte Montage zulässt, ist in Fig. 6 dargestellt. In diesem Fall ist auf jeder Längsseite 14 eine mittige Greif-Zentrierung 3 in Form einer symmetrischen Werkzeugangriffskontur 3 mit trapezförmigem, sich zum Inneren des Gewichtskörpers 1 hin verjüngendem Querschnitt gegeben. In nicht dargestellter Weise sind auch die Gewichtskörper 1 nach den Figuren 3 bis 6 optional, wie in den Figuren 1 und 2 skizziert, mit Einschnitten 16 auf der Vorderseite 12 versehen, welche bei streifenförmigen Klebegewichten 10 für eine leichtere Biegbarkeit sorgen.

In allen Ausführungsbeispielen nach den Figuren 7 bis 11 sind die Längsseiten 14 der jeweiligen Gewichtskörper 1 als geschlossene, ebene Flächen oder Wandungen ausgebildet. Werkzeugangriffskonturen 4 sind in diesen Fällen als Greif-Bohrungen ausgebildet, deren mögliche Formen in den Figuren 12 bis 14 dargestellt sind. Hierbei ist jede der in den Figuren 12 bis 14 dargestellten Querschnittsformen, nämlich Kreisform, Halbkreis, Polygone, zum Beispiel Dreieck, Viereck oder Fünfeck, sowie Sternformen, insbesondere vierzackige und fünfzackige Sterne, für alle Ausführungsbeispiele nach den Figuren 7 bis 11 geeignet. Hierbei ist durch die Art und Anordnung der Greif-Bohrungen 4 in allen Fällen sichergestellt, dass der jeweilige Gewichtskörper 1 lage- und winkelgerecht mit Hilfe eines geeigneten, nicht dargestellten Werkzeugs greif- und montierbar ist. In keinem Fall weisen sämtliche Greif-Bohrungen 4 eines Gewichtskörpers 1 einen kreisförmigen Querschnitt auf. Mögliche Positionierungen von Greif-Bohrungen 4 auf der Vorderseite 12 des Gewichtskörpers 1 sind

- eine zentrale Greif-Bohrung 4 (Fig. 7),

- zwei symmetrisch auf einer zu den Längsseiten 14 parallelen Geraden angeordnete Greif-Bohrungen 4 (Fig. 8),

- drei an den Ecken eines gedachten Dreiecks angeordnete Greif-Bohrungen 4 (Fig. 9),

- drei längs einer zu den Längsseiten 14 schräg verlaufenden Geraden angeordnete Greif-Bohrungen 4 (Fig. 10),

- vier in einem rechteckigen, zu den Schmalseiten 13 sowie den Längsseiten 14 symmetrischen Muster angeordnete Greif-Bohrungen 4 (Fig. 11).

In allen Fällen können die als Werkzeugangriffskonturen 4 fungierenden Greif-Bohrungen entweder als Durchgangsbohrungen oder als Sacklöcher ausgebildet sein.

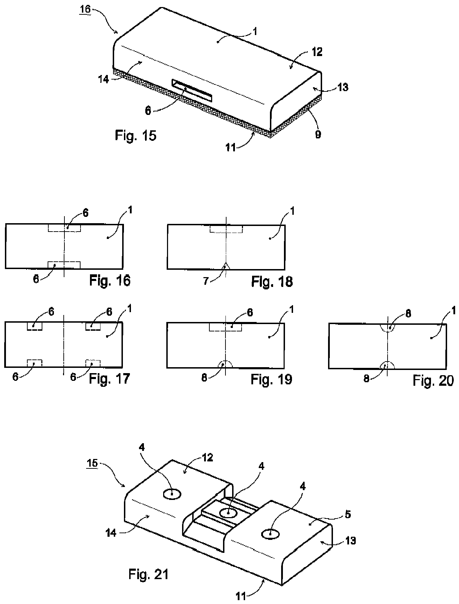

Das Ausführungsbeispiel nach Fig. 15 zeichnet sich dadurch aus, dass im Unterschied zu den Ausführungsbeispielen nach den Figuren 7 bis 14 die Vorderseite 12 des Gewichtskörpers 1 vollständig geschlossen ist, während die Längsseiten 14 flache, sowohl von der Befestigungsseite 11 als auch von der Vorderseite 12 beabstandete Greiftaschen 6 als Werkzeugangriffskonturen aufweisen. Wie alle vorstehend erläuterte Ausführungsformen ist auch das in den Figuren 15 und 16 dargestellte Auswuchtgewicht 10 als Klebegewicht ausgebildet.

Im Ausführungsbeispiel nach Fig. 15 und 16 weisen die als Taschen ausgebildeten Werkzeugangriffskonturen 6 im Schnitt eine rechteckige Form auf und ähneln insofern den als Greifflächen ausgebildeten Werkzeugangriffskonturen 2 des Gewichtskörpers 1 nach den Figuren 1 und 2. Ein Vorteil der Ausführungsform nach den Figuren 15 und 16 liegt darin, dass durch die Taschenform der Werkzeugangriffskonturen 6 eine besonders präzise Höhenpositionierung, das heißt Positionierung in Normalrichtung zur Befestigungsseite 11, des Gewichtskörpers 1 möglich ist. Ferner ist durch das Eingreifen eines Handlingwerkzeugs in die Greiftaschen 6 ein besonders zuverlässiges, mit Formschluss arbeitendes Greifen des Auswuchtgewichts 10 sichergestellt.

Die Ausführungsformen nach den Figuren 17 bis 19 weisen verschiedene Querschnittsvarianten der Greiftaschen 6 auf, wie sie prinzipiell den Werkzeugangriffskonturen 2,3 der Ausführungsbeispiele nach den Figuren 3 bis 5 entsprechen. In analoger Weise werden auch in den Ausführungsformen nach den Figuren 17 und 19 besondere Vorteile hinsichtlich der Positioniergenauigkeit und Selbstzentrierung erreicht:

Der Gewichtskörper 1 nach Fig. 17 weist auf jeder Längsseite 14 zwei Greiftaschen 6 als Werkzeugangriffskonturen auf. Alle vier Greiftaschen 6 befinden sich in einer gemeinsamen Ebene, die von der Befestigungsseite 11 sowie von der Vorderseite 12 des Gewichtskörpers 1 parallel beabstandet ist.

Im in Fig. 18 dargestellten Ausführungsbeispiel ist an einer der Längsseiten 14 eine Werkzeugangriffskontur als spitz zulaufende Greifkeil-Zentrierung 7 ausgebildet. Diese Werkzeugangriffskontur 7 ermöglicht sowohl eine Selbstzentrierung des Gewichtskörpers 1 als auch dessen exakte Höhenpositionierung.

Das Ausführungsbeispiel nach Fig. 19 unterscheidet sich vom Ausführungsbeispiel nach Fig. 18 dadurch, das die Werkzeugangriffskontur an einer der Längsseiten 14 als Greifhalbbogen-Zentrierung 8 ausgebildet ist. Im Ausführungsbeispiel nach Fig. 20 ist an beiden Längsseiten 14 eine derartige Greifhalbbogen-Zentrierung als Werkzeugangriffskontur 8 vorgesehen.

In Fig. 21 ist ein als Steckgewicht 15 ausgebildetes Auswuchtgewicht dargestellt, dessen Gewichtskörper 5 mittels einer nicht dargestellten Haltefeder an einer Stahlfelge befestigbar ist. Der Gewichtskörper 5 weist mehrere Greifbohrungen 4 auf, deren Gestaltungsmöglichkeiten den Ausführungsbeispielen nach den Figuren 7 bis 14 entsprechen. Für die Montage des Steckgewichts 15 nach Fig. 21 sind dieselben Handhabungsvorrichtungen verwendbar wie für die Montage eines Klebegewichts 10.

### Bezugszeichenliste

- 1: Gewichtskörper (eines Klebegewichts)
- 2: Werkzeugangriffskontur (Greiffläche)
- 3: Werkzeugangriffskontur (Greif-Zentrierung, v-, halbkreis- oder trapezförm ig)
- 4: Werkzeugangriffskontur (Greif-Bohrung)
- 5: Gewichtskörper (eines Steckgewichts)
- 6: Werkzeugangriffskontur (Greiftasche)
- 7: Werkzeugangriffskontur (Greifkeil-Zentrierung)
- 8: Werkzeugangriffskontur (Greifhalbbogen-Zentrierung)
- 9: Klebeband
- 10: Auswuchtgewicht (als Klebegewicht)
- 11: Befestigungsseite
- 12: Vorderseite
- 13: Schmalseite
- 14: Längsseite
- 15: Auswuchtgewicht (als Steckgewicht)
- 16: Einschnitt

## Patentansprüche

1. Auswuchtgewicht (10,15), mit einem an einem Rotationskörper befestigbaren Gewichtskörper (1,5), welcher eine zur Anlage an dem Rotationskörper vorgesehene Befestigungsseite (11), eine dieser gegenüberliegende Vorderseite (12), sowie die Befestigungsseite (11) mit der Vorderseite (12) verbindende Längsseiten (14) und Schmalseiten (13) aufweist, **gekennzeichnet durch** eine Werkzeugangriffskontur (2,3,4,6,7,8), welche zum positions- und winkelgerechten Greifen des Gewichtskörpers (1,5) ausgebildet ist.

2. Auswuchtgewicht (10,15) nach Anspruch 1, **dadurch gekennzeichnet, dass** die Werkzeugangriffskontur (2,3,6,7,8) an einer Längsseite (14) des Gewichtskörpers (1,5) ausgebildet ist.

3. Auswuchtgewicht (10,15) nach Anspruch 2, **dadurch gekennzeichnet, dass** jeweils eine Werkzeugangriffskontur (2,3,6,7,8) an gegenüberliegenden Längsseiten (14) des Gewichtskörpers (1,5) ausgebildet ist.

4. Auswuchtgewicht (10,15) nach Anspruch 3, **dadurch gekennzeichnet, dass** sich zumindest eine der Werkzeugangriffskonturen (3,7,8) zur Mitte des Gewichtskörpers (1,5) hin verjüngt.

5. Auswuchtgewicht (10,15) nach Anspruch 3 oder 4, **dadurch gekennzeichnet, dass** die Werkzeugangriffskonturen (6,7,8) taschenförmig ausgebildet sind und sich parallel zur Befestigungsseite (11) sowie zur Vorderseite (12) erstrecken.

6. Auswuchtgewicht (10,15) nach einem der Ansprüche 1 bis 5, **dadurch gekennzeichnet, dass** in jeweils einem Bereich der Vorderseite (12) zwischen der Werkzeugangriffskontur (2,3,4,6,7,8) und einer der Schmalseiten (13) ein sich parallel zu den Schmalseiten (13) erstreckender Einschnitt (16) im Gewichtskörper (1,5) ausgebildet ist.

7. Auswuchtgewicht (10,15) nach Anspruch 1, **dadurch gekennzeichnet, dass** die Werkzeugangriffskontur (4) in der Vorderseite (12) des Gewichtskörpers (1,5) ausgebildet ist.

8. Auswuchtgewicht (10,15) nach Anspruch 7, **dadurch gekennzeichnet, dass** die Werkzeugangriffskontur (4) als Sackloch ausgebildet ist.

9. Auswuchtgewicht (10,15) nach Anspruch 8, **dadurch gekennzeichnet, dass** die Werkzeugangriffskontur (4) als Durchgangsbohrung ausgebildet ist.

10. Auswuchtgewicht (10,15) nach Anspruch 8 oder 9, **dadurch gekennzeichnet, dass** die Werkzeugangriffskontur (4) eine von der Kreisform abweichende Querschnittsform aufweist.

11. Auswuchtgewicht (10,15) nach Anspruch 10, **dadurch gekennzeichnet, dass** die Werkzeugangriffskontur (4) einen halbkreisförmigen Querschnitt aufweist.

12. Auswuchtgewicht (10,15) nach Anspruch 10, **dadurch gekennzeichnet, dass** die Werkzeugangriffskontur (4) im Querschnitt ein Polygon beschreibt.

13. Auswuchtgewicht (10,15) nach Anspruch 10, **dadurch gekennzeichnet, dass** die Werkzeugangriffskontur (4) einen sternförmigen Querschnitt aufweist.

14. Auswuchtgewicht (10,15) nach einem der Ansprüche 10 bis 13, **dadurch gekennzeichnet, dass** in der Vorderseite (12) des Gewichtskörpers (1,5) mehrere Werkzeugangriffskonturen (4) mit voneinander abweichenden Querschnittsformen ausgebildet sind.

15. Auswuchtgewicht (10,15) nach einem der Ansprüche 1 bis 14, **dadurch gekennzeichnet, dass** dieses als Klebegewicht (10) ausgebildet ist.

16. Auswuchtgewicht (10,15) nach einem der Ansprüche 1 bis 14, **dadurch gekennzeichnet, dass** dieses als Schlag- oder Steckgewicht (15) ausgebildet ist.
